# FASCICULE DE BREVET EUROPEEN

(11) **EP 3 599 408 B1**
(45) Date de publication et mention de la délivrance du brevet: **05.05.2021**
(21) Numéro de dépôt: 19187859.4
(22) Date de dépôt: 23.07.2019
(51) Int. Cl.: F16L 37/23, F16L 37/34

(54) **RACCORD RAPIDE POUR LA JONCTION AMOVIBLE DE DEUX CANALISATIONS PARCOURUES PAR UN FLUIDE SOUS PRESSION**
SCHNELLKUPPLUNG FÜR DIE LÖSBARE VERBINDUNG VON ZWEI ROHREN, DURCH DIE EINE FLÜSSIGKEIT UNTER DRUCK FLIESST
QUICK COUPLING FOR REMOVABLE CONNECTION OF TWO PIPES CONTAINING PRESSURISED FLUID

(30) Priorité: 24.07.2018 FR 1856848
(43) Date de publication de la demande: 29.01.2020
(73) Titulaire: Staubli Faverges, 74210 Faverges-Seythenex (FR)
(72) Inventeur: TIBERGHIEN, Alain-Christophe, 74320 Sevrier (FR); DURIEUX, Christophe, 73200 Gilly sur Isere (FR); BAHNO, Igor, 73400 Ugine (FR); PASTORE, Olivier, 73400 Ugine (FR); POLY, Olivier, 74560 Chavanod (FR); MARQUES-BARROCA, Serafim, 73460 Frontenex (FR); MAYER, Romain, 73400 Hery sur Ugine (FR)
(74) Mandataire: Lavoix

(56) Documents cités:
- WO-A1-2016/037890
- FR-A1- 2 861 159
- JP-A- 2007 024 233

## Description

La présente invention concerne un raccord rapide pour la jonction amovible de deux canalisations parcourues par un fluide sous pression.

Dans le domaine de la connexion de conduites de fluide sous pression, il est connu d'utiliser un raccord comprenant deux éléments de raccord complémentaires (mâle et femelle). Les deux éléments de raccord comportent des organes mobiles qui se repoussent mutuellement, par simple rapprochement des deux éléments de raccord, pour ouvrir une veine fluide reliant les conduits de passage des deux éléments de raccord. En pratique, on retrouve un élément d'étanchéité, du type joint torique, qui assure l'étanchéité entre les conduits respectifs des deux éléments de raccord tant qu'il est en contact avec une surface, souvent cylindrique. La veine fluide s'ouvre dès la perte de ce contact. Aussi, l'élément d'étanchéité est directement exposé au fluide circulant dans la veine en position accouplée du raccord, et ce dès l'équilibrage (en pression) des conduites à connecter. FR 2 861 159 A1 divulgue un exemple de raccord de ce type.

Un problème inhérent à la jonction de canalisations sous pression est qu'il y a souvent un différentiel de pression important entre les deux canalisations à connecter : généralement, l'une des deux conduites est déjà sous pression lors du raccordement (pression de service). Ainsi, le joint d'étanchéité subit des contraintes importantes lorsque la communication fluidique entre les deux éléments de raccord est établie, notamment car l'équilibrage en pression intervient brusquement.

Dans FR 2 861 159 A1 typiquement, le joint d'étanchéité est soumis à un pic de pression lorsque le poussoir de l'élément femelle de raccord dépasse l'embouchure de l'élément mâle complémentaire au niveau d'un cône, et repousse la soupape mâle pour connecter les deux canalisations. Cette phase a lieu dans une configuration dite d'équilibrage qu'on identifie entre le début d'accouplement et la phase de connexion totale des conduites. Il s'agit de la dernière barrière d'étanchéité entre les deux conduites à connecter.

A l'équilibrage, la pression s'exerçant sur la périphérie du joint augmente brutalement, de telle sorte qu'une partie ou la totalité du joint est étirée et entrainée par la pression contre l'épaulement du logement. Dans le cas le plus favorable, le joint se retrouve en travers à l'intérieur de son logement, alors que dans le cas le plus défavorable, le joint sort complètement de son logement. Ce défaut de positionnement entraine, lors de la déconnexion mécanique des éléments de raccord, des fuites au niveau de la face avant de l'élément de raccord sous pression, lesquelles proviennent par exemple d'un mauvais retour en position des éléments d'étanchéité en face avant. Clairement, ce problème d'étanchéité peut s'avérer dommageable, notamment pour des applications de refroidissement d'électronique fragile ou en cas de déversement d'huile sur des appareils inflammables.

L'exposition des joints dans la veine fluide peut donc entraîner des problèmes de fermeture et d'étanchéité à la déconnexion du raccord. A long terme, l'expulsion partielle du joint hors de son logement peut également poser des problèmes de dégradation accélérée.

Pour pallier ce problème, il est connu, par exemple de EP 2 669 560 A1, de réaliser une fuite au niveau d'une face d'étanchéité pour décharger la conduite sous pression par l'intermédiaire d'une section d'étanchéité supplémentaire, en plus de celle assurant l'étanchéité du raccord à l'état accouplé. Cette solution nécessite la création d'une zone d'étanchéité et d'un joint supplémentaires qui ajoutent des contraintes de conception liées à l'encombrement et des contraintes d'industrialisation. La fuite créée est dispersée à l'extérieur du raccord, ce qui est problématique dans certaines applications. En outre, le problème d'entrainement du joint par le débit de fluide à la connexion est éventuellement réduit, mais non résolu par l'abaissement de pression.

Il est aussi connu de EP 0 477 949 A1 de prévoir une protection de joint adaptée au passage de fluide dans le sens radial, mais dont les frottements dynamiques à chaque connexion sur les surfaces des pièces mécaniques peuvent être néfastes dans la durée de vie du joint.

L'objet de l'invention est de remédier aux inconvénients précités en proposant un nouveau raccord qui palie la situation d'augmentation brutale de pression lors de la connexion des deux éléments de raccord, pour éviter le déboitement temporaire ou permanent du joint d'étanchéité lors de l'équilibrage en pression.

A cet effet l'invention concerne un raccord rapide pour la jonction amovible de deux canalisations parcourues par un fluide sous pression, composé d'un élément mâle et d'un élément femelle apte à recevoir l'élément mâle par emmanchement selon un axe longitudinal entre une configuration désaccouplée et une configuration accouplée.

L'élément mâle comprend un corps mâle cylindrique, définissant une cavité longitudinale et une embouchure distale de diamètre inférieur à celui de la cavité, une soupape mobile axialement à l'intérieur de la cavité, entre une position avancée dans laquelle elle obture l'embouchure et une position reculée dans laquelle elle n'obture pas l'embouchure, et un premier joint d'étanchéité, qui est porté par la soupape ou le corps mâle et qui prend appui respectivement sur une paroi cylindrique interne du corps mâle ou sur une paroi cylindrique externe de la soupape, lorsque la soupape est en position avancée.

L'élément femelle comprend un corps femelle cylindrique, définissant une cavité longitudinale et une embouchure distale de diamètre inférieur ou égal à celui de la cavité, un tiroir, mobile axialement à l'intérieur de la cavité longitudinale entre une position avancée, dans laquelle il obture l'embouchure et une position reculée dans laquelle il n'obture pas l'embouchure, et un second joint d'étanchéité, qui est porté par un organe parmi un poussoir central solidaire du corps femelle, le tiroir ou le corps femelle et qui prend appui sur un autre organe parmi le tiroir, le poussoir ou le corps femelle, lorsque le tiroir est en position avancée.

Conformément à l'invention, le premier ou le second joint d'étanchéité est logé à l'intérieur d'une gorge périphérique. Aussi, un bord proximal ou distal de la gorge périphérique s'étend entre deux plans perpendiculaires à un axe longitudinal de l'élément mâle ou femelle, respectivement entre un plan proximal et un plan distal, qui sont décalés l'un par rapport à l'autre le long de l'axe longitudinal.

Ainsi, l'effet de l'invention est de créer une fuite locale sur un segment de joint interne ou externe avant l'ouverture complète du circuit, ce qui permet de faire chuter la pression, sans que le joint ne soit brutalement exposé à la pression de la veine fluide et sans engendrer de fuites à l'extérieur du raccord.

Selon des aspects avantageux, mais non obligatoires de l'invention, le raccord peut comporter une ou plusieurs des caractéristiques suivantes :
- Les deux plans proximal et distal sont décalés l'un de l'autre d'une distance correspondant à une, deux, trois ou quatre épaisseurs de tore du premier ou du second joint d'étanchéité.
- Le bord proximal ou distal de la gorge périphérique comprend deux tronçons positionnés l'un par rapport à l'autre à une distance, mesurée parallèlement à l'axe longitudinal, identique à la distance entre le plan proximal et le plan distal, alors que ces deux tronçons sont disposés de manière diamétralement opposée l'un par rapport à l'autre.
- Le tiroir est disposé radialement entre le corps femelle et un poussoir central solidaire du corps femelle.
- Le premier joint d'étanchéité est porté par le corps mâle ou la soupape, alors que le second joint d'étanchéité est porté par le tiroir ou le poussoir central.
- Dans une configuration d'équilibrage, définie entre la configuration désaccouplée et la configuration accouplée du raccord, le second joint d'étanchéité comprend une portion arrière qui est en contact étanche avec la paroi cylindrique interne du corps mâle et une portion avant qui n'est pas en contact étanche avec la paroi cylindrique interne du corps mâle, de telle façon qu'une liaison fluidique est formée entre les cavités des éléments mâle et femelle.
- La paroi cylindrique interne du corps mâle est apte à retenir radialement la portion arrière du second joint d'étanchéité dans la configuration d'équilibrage, la portion avant du second joint d'étanchéité n'étant pas retenue radialement.
- Dans une configuration d'équilibrage, définie entre la configuration désaccouplée et la configuration accouplée du raccord le premier joint d'étanchéité comprend une portion arrière qui est en contact étanche avec une paroi cylindrique externe du poussoir central et une portion avant qui n'est pas en contact étanche avec la paroi cylindrique externe du poussoir central, de telle façon qu'une liaison fluidique est formée entre les cavités des éléments mâle et femelle.
- La portion arrière du premier joint d'étanchéité est retenue radialement par la paroi cylindrique externe du poussoir central dans la configuration d'équilibrage, la portion avant du premier joint d'étanchéité n'étant pas retenue radialement.
- Le contact entre la portion arrière du premier joint d'étanchéité ou du second joint d'étanchéité et respectivement le poussoir central ou le corps mâle, est un contact linéique.
- La ligne de contact entre la portion arrière du premier joint d'étanchéité ou du second joint d'étanchéité et respectivement le poussoir central ou le corps mâle, comprend plusieurs segments linéiques disjoints.
- La liaison fluidique entre les cavités des éléments mâle et femelle est réalisée de façon étanche par rapport à l'extérieur.
- La gorge périphérique est formée sur une paroi cylindrique externe du poussoir central et loge le second joint d'étanchéité, alors que le premier joint d'étanchéité est logé à l'intérieur d'une autre gorge périphérique formée sur la paroi cylindrique externe de la soupape.
- La gorge périphérique est formée sur la paroi cylindrique interne du corps mâle et loge le premier joint d'étanchéité, alors que le second joint d'étanchéité est logé à l'intérieur d'une autre gorge périphérique formée sur une paroi cylindrique interne du tiroir.
- La gorge périphérique est de forme elliptique dans un plan oblique par rapport à un plan perpendiculaire à un axe longitudinal de l'élément de raccord.

L'invention et d'autres avantages de celle-ci apparaitront plus clairement à la lumière de la description qui va suivre de quatre modes de réalisation d'un raccord conforme à son principe, donnée uniquement à titre d'exemple et faite en référence aux dessins annexés dans lesquels :
- La figure 1 est une coupe longitudinale d'un raccord selon un premier mode de réalisation de l'invention, dans laquelle le raccord est représenté dans une configuration désaccouplée ;
- La figure 2 est une coupe partielle, dans le sens de la longueur, dans laquelle le raccord se trouve dans une première configuration intermédiaire entre la configuration désaccouplée et une configuration accouplée ;
- La figure 3 est une vue à plus grande échelle de l'encadré III de la figure 2 ;
- La figure 4 est une coupe comparable à celle de la figure 2, dans laquelle le raccord se trouve dans une deuxième configuration ultérieure ;
- La figure 5 est une coupe comparable à celle des figures 2 et 4, dans laquelle le raccord se trouve dans une troisième configuration intermédiaire, dite d'équilibrage, entre la configuration désaccouplée et la configuration accouplée ;
- La figure 6 est une coupe longitudinale du raccord en configuration accouplée ;
- La figure 7 est une coupe longitudinale d'un raccord selon un deuxième mode de réalisation de l'invention, dans laquelle le raccord se trouve dans une première configuration intermédiaire entre la configuration désaccouplée et une configuration accouplée ;
- La figure 8 est une coupe partielle, dans le sens de la longueur, dans laquelle le raccord de la figure 7 se trouve dans une deuxième configuration ultérieure, dite d'équilibrage, entre la configuration désaccouplée et une configuration accouplée ;
- La figure 9 est une coupe comparable à celle de la figure 8, dans laquelle le raccord de la figure 7 se trouve dans une configuration accouplée ou quasi-accouplée;
- Les figures 10 et 11 sont des vues en coupe, respectivement dans le plan X-X et XI-XI des figures 7 et 9 ;
- La figure 12 est une coupe partielle, comparable à celle de la figure 8, représentant un raccord selon un troisième mode de réalisation de l'invention, et dans laquelle le raccord se trouve dans une première configuration intermédiaire entre une configuration désaccouplée et une configuration accouplée ;
- La figure 13 est une coupe comparable à celle de la figure 12, dans laquelle le raccord se trouve dans une deuxième configuration ultérieure, dite d'équilibrage, entre la configuration désaccouplée et la configuration accouplée ;
- La figure 14 est une coupe dans le plan XIV-XIV de la figure 13 ;
- La figure 15 est une vue en perspective d'un poussoir appartenant à un élément de raccord, du type femelle, du raccord selon le troisième mode de réalisation ; et
- Les figures 16 et 17 sont deux coupes longitudinales d'un raccord selon un quatrième mode de réalisation de l'invention, qui représentent le raccord dans deux configurations, respectivement dans une configuration sensiblement désaccouplée et dans une configuration intermédiaire, dite d'équilibrage, entre la configuration désaccouplée et une configuration accouplée.

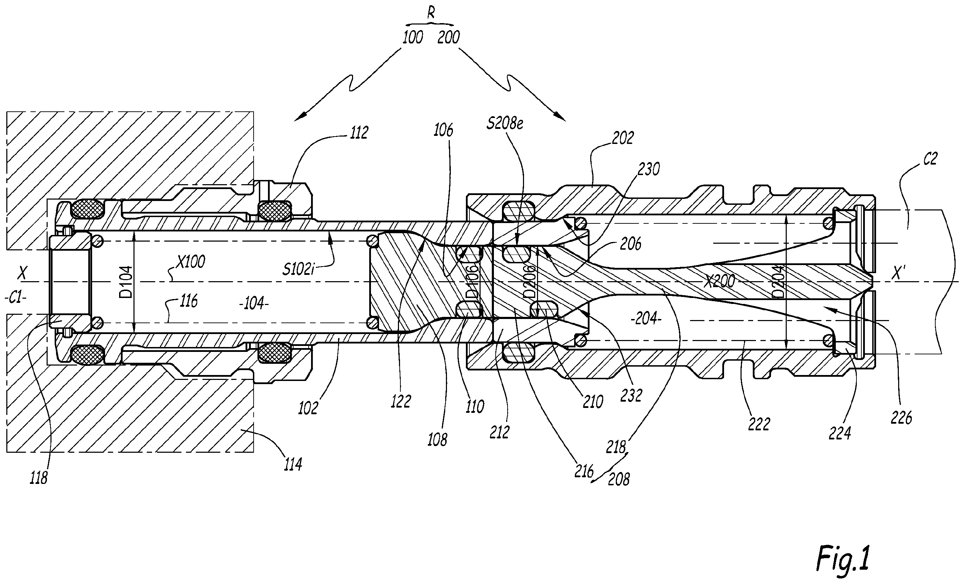

Sur les figures 1 à 6 est représenté un premier mode de réalisation d'un raccord rapide R pour la jonction amovible de deux canalisations C1 et C2 parcourues par un fluide sous pression. Les canalisations C1 et C2 sont représentées schématiquement en traits fins à la figure 1 uniquement.

Avantageusement, le raccord R peut être utilisé quel que soit le sens de circulation du fluide à l'intérieur des conduites C1 et C2.

Comme visible à la figure 1, le raccord R est composé d'un élément mâle 100 et d'un élément femelle 200 apte à recevoir l'élément mâle 100 par emmanchement selon un axe longitudinal X-X'.

L'invention s'applique particulièrement à la configuration où l'une des canalisations parmi les canalisations C1 et C2 est sous pression, typiquement à une pression dite de service comprise entre 3 et 7 bars, tandis que l'autre canalisation n'est pas sous pression. Par exemple, un des éléments de raccord 100 ou 200 est fixé de façon étanche à un appareillage de source de liquide de refroidissement (non représentée) et de débit en amont, et l'autre élément, respectivement 200 ou 100, à l'alimentation d'un appareil de conduction du liquide de refroidissement vers des circuits électroniques (non représentés) en aval.

Dans un repère associé à un élément de raccord 100 ou 200, on définit les directions « avant » et « distale » comme des directions parallèles à l'axe longitudinal X-X' et tournées vers l'élément de raccord complémentaire, respectivement 200 ou 100. A l'inverse, on définit les directions « arrière » et « proximale » comme des directions parallèles à l'axe longitudinal X-X' et tournées du côté opposé à l'élément de raccord complémentaire 200 ou 100

Dans l'exemple, la partie arrière de l'élément mâle 100 est connectée à la canalisation C1, alors que la partie arrière de l'élément femelle 200 est connectée à la canalisation C2.

Comme visible à la figure 1, l'élément mâle 100 prend globalement la forme d'un cylindre, centré sur un axe longitudinal X100.

L'élément mâle 100 comprend un corps mâle cylindrique 102, centré sur l'axe X100 et définissant une cavité longitudinale 104 et une embouchure distale 106 dont le diamètre D106 est inférieur au diamètre D104 de la cavité 104.

Un écrou 112 est disposé coaxialement autour du corps mâle 102. L'écrou 112 est vissé à l'intérieur d'un taraudage délimité par une plaque de raccordement 114, qualifiée de « plaque aval ».

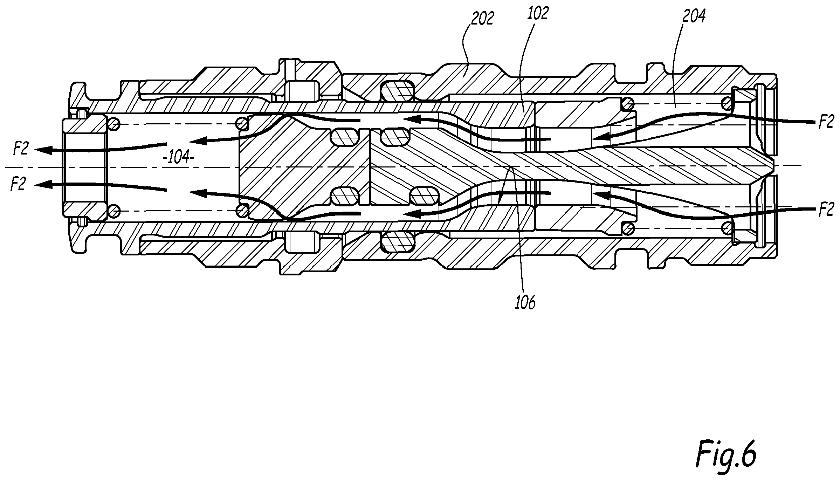

L'élément mâle 100 comprend aussi une soupape 108 mobile axialement, c'est-à-dire parallèlement à l'axe X100, à l'intérieur de la cavité 104, entre une position avancée, représentée à la figure 1, dans laquelle elle obture l'embouchure 106 par un contact étanche avec une paroi cylindrique interne S102i du corps mâle 102, et une position reculée, représentée à la figure 6 par exemple, dans laquelle elle n'obture pas l'embouchure 106.

Un moyen de rappel 116, typiquement un ressort, rappelle la soupape 108 en position avancée. Cela signifie que le moyen de rappel 116 charge élastiquement la soupape 108 vers l'avant.

Le moyen de rappel 116 est interposé axialement entre la soupape 108 et une butée 118 disposée, à l'intérieur du corps 102, à l'extrémité arrière.

Avantageusement, le corps mâle 102 définit, sur sa surface radiale interne S102i, un siège 122 contre lequel la soupape 108 vient en butée lors du rappel en position avancée, et également en configuration désaccouplée. Ce siège 122 est formé par une surface évasée, convergeant vers l'avant. On pourrait aussi envisager, en variante, un simple épaulement.

De préférence, le siège de soupape 122 est en forme de cône, dont le sommet est dirigé vers l'avant et dont l'angle de cône est proche de 60°.

Ici, le siège de soupape 122 sépare l'embouchure cylindrique 106 de la cavité 104, laquelle présente un diamètre plus important.

L'élément mâle 100 comprend également un joint d'étanchéité 110, avantageusement porté par la soupape 108. Plus précisément, le joint 110 est monté à l'intérieur d'un logement périphérique, notamment une gorge annulaire 111, définie sur la surface radiale externe S108e de la soupape 108. Ici, le joint d'étanchéité 110 est un joint torique (annulaire et fermé).

Le joint d'étanchéité 110 assure la fermeture étanche de la cavité 104 de l'élément mâle 100 par un contact étanche entre la soupape 108 et le corps 102 lors de sa prise d'étanchéité sur son siège 122 et son positionnement en face avant. Avantageusement, lorsque les éléments mâle et femelle sont en configuration désaccouplée, le joint d'étanchéité 110 est en contact étanche avec la paroi cylindrique interne S102i du corps mâle 102.

Des joints d'étanchéité sont également prévus entre le corps mâle 102 et la plaque aval 114 et entre l'écrou 112 et le corps mâle 102.

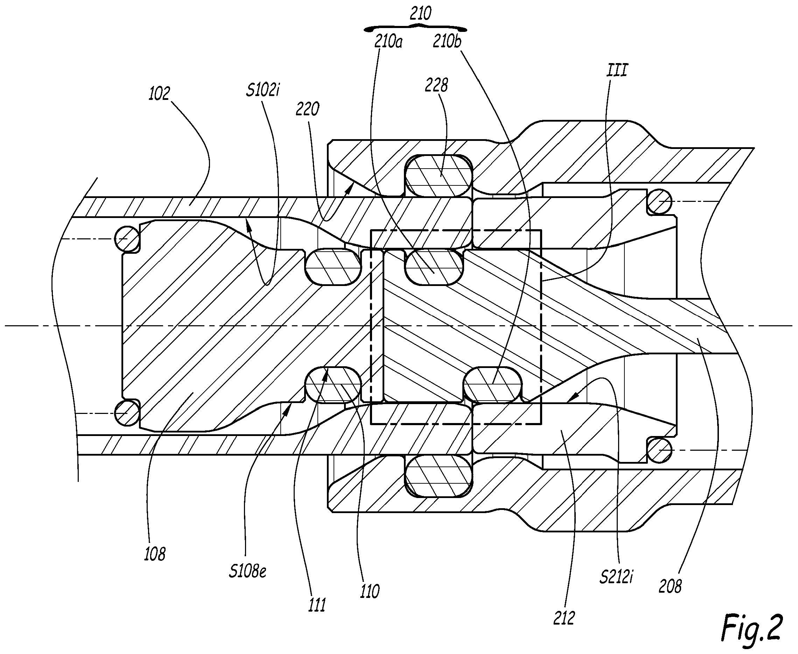

Comme visible à la figure 2, l'élément femelle 200 prend globalement la forme d'un cylindre, centré sur un axe longitudinal X200.

L'élément femelle 200 comprend un corps femelle cylindrique 202, centré sur l'axe X200, et définissant une cavité longitudinale 204 et une embouchure distale 206 dont le diamètre D206 est inférieur au diamètre D204 de la cavité 204.

Un poussoir 208 (ou piston) est disposé au centre du corps femelle 202. Avantageusement, le poussoir 208 comprend, à l'avant, une tête de poussoir 216 apte à maintenir un contact étanche avec la soupape 108 en position désaccouplée du raccord et, à l'arrière, une partie tubulaire 218 (ou tige centrale) dont le diamètre est plus petit que celui de la tête 216. Typiquement, le poussoir 208 délimite une section 232 qui prolonge la tête de poussoir 216 en une tige centrale 218 de plus petit diamètre.

Avantageusement, la section 232 est de forme tronconique, dont le sommet est dirigé vers l'arrière et dont l'angle est proche d'une valeur de 60°.

Un tiroir 212 est agencé radialement entre le corps femelle 202 et le poussoir 208. Ce tiroir 212 est mobile axialement à l'intérieur de la cavité longitudinale 204 entre une position avancée, représentée à la figure 1, dans laquelle il obture l'embouchure 206 par un contact étanche avec une paroi cylindrique externe S208e du poussoir 208 et avec une paroi cylindrique interne du corps femelle 202, et une position reculée, représentée à la figure 6 par exemple, dans laquelle il n'obture pas l'embouchure 206.

Un moyen de rappel 222, typiquement un ressort, rappelle le tiroir 212 en position avancée. Cela signifie que le moyen de rappel 222 charge élastiquement le tiroir 212 vers l'avant.

Avantageusement, le corps femelle 202 définit, sur sa surface radiale interne, un siège 230 contre lequel le tiroir vient en butée lors du rappel en position avancée, et également en configuration désaccouplée. Ce siège 230 est formé par une surface tronconique, convergeant vers l'avant. On pourrait aussi envisager, en variante, un simple épaulement.

Le moyen de rappel 222 est interposé axialement entre le tiroir 212 et une butée 224 disposée, à l'intérieur du corps 202, à l'extrémité arrière entre un épaulement du corps 202 et un jonc. De préférence, la butée 224 et le poussoir 208 sont d'un seul tenant.

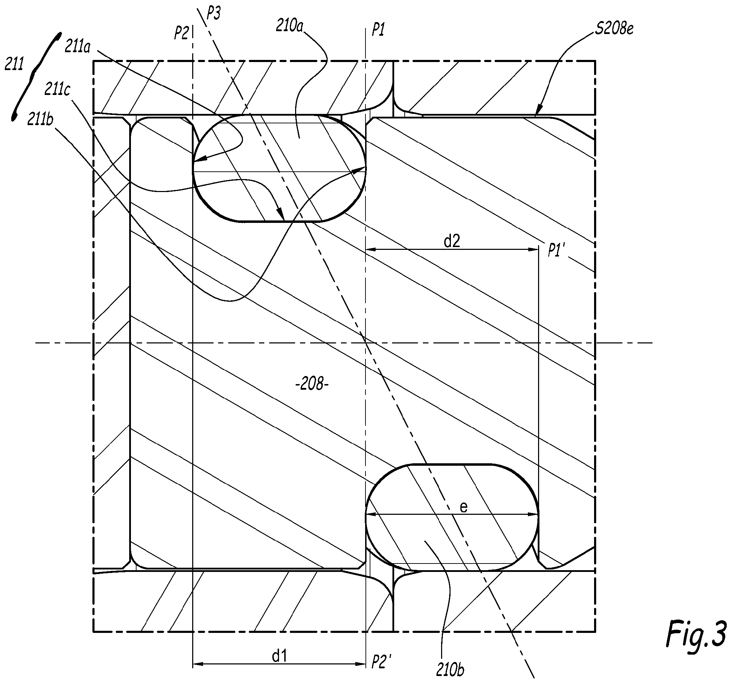

Le poussoir 208 porte avantageusement un joint d'étanchéité 210. Plus précisément, le joint 210 est monté à l'intérieur d'un logement périphérique, notamment une gorge annulaire 211, définie sur la surface radiale externe S208e du poussoir 208. Comme visible à la figure 3, la gorge périphérique 211 est en forme de U, et comprend un bord distal 211a, un bord proximal 211b et un fond 211c, sensiblement plat, s'étendant entre les deux parois de bord 211a et 211b. Evidemment, d'autres sections de gorge sont envisageables.

De préférence, la profondeur de la gorge 211 et/ou 111 (mesurée radialement à l'axe longitudinal X100 ou X200) est identique sur toute sa circonférence.

Le bord distal 211a de la gorge périphérique 211 s'étend entre deux plans P1 et P2 perpendiculaires à l'axe longitudinal X200, respectivement entre un plan proximal P1 et un plan distal P2, qui sont décalés l'un par rapport à l'autre d'une distance d1 le long de l'axe longitudinal X200. Cela signifie que le bord distal 211a est compris dans un volume délimité entre les plans P1 et P2.

Le bord proximal 211b de la gorge périphérique 211 s'étend entre deux plans P1' et P2' perpendiculaires à l'axe longitudinal X200, respectivement entre un plan proximal P1' et un plan distal P2', qui sont décalés l'un par rapport à l'autre d'une distance d2 le long de l'axe longitudinal X200. Cela signifie que le bord proximal 211b est compris dans un volume délimité entre les plans P1' et P2'.

Aussi, et comme visible à la figure 3, la gorge périphérique 211 est de forme elliptique dans un plan P3 oblique par rapport à un plan perpendiculaire à l'axe longitudinal X200, tel que le plan P1 ou P2, de l'élément de raccord 200. Par conséquent, le joint d'étanchéité 210 est logé dans une gorge elliptique. Typiquement, on retrouve un angle d'environ 15° par rapport à un plan perpendiculaire à l'axe X100 ou X200.

Avantageusement, la gorge 211 est réalisée par fraisage en tournant et translatant un arbre (ébauche du poussoir 208) pour donner à la gorge 211 la courbure ou l'inclinaison voulue.

Selon un mode de réalisation préférentiel, la distance d1 et/ou d2 correspond à au moins une épaisseur e de tore du joint d'étanchéité 210. De façon encore plus avantageuse, la distance d1 et/ou d2 correspond à une, deux, trois ou quatre épaisseurs e de tore. L'épaisseur de tore e est mesurée parallèlement à l'axe longitudinal X200.

Dans ce document, les termes « secteur », « segment », « segment angulaire » ou encore « segment circulaire » désignent avec la même signification un arc de cercle, une portion, un tronçon, ou une partie angulaire d'un joint ou d'une gorge (de révolution, circulaire, torique). Il s'agit donc d'une sous-partie d'un joint élastomère (ou d'une gorge), c'est-à-dire d'un échantillon de son pourtour.

Comme visible à la figure 3, le bord proximal 211b ou distal 211a de la gorge périphérique 211 comprend deux tronçons (non référencés) positionnés l'un par rapport à l'autre à une distance, mesurée parallèlement à l'axe X200, identique à la distance d1 entre le plan proximal P1 et le plan distal P2. Ces deux tronçons sont disposés de manière diamétralement opposée l'un par rapport à l'autre.

Ici, les plans P1 et P2 ou P1' et P2' des bords des secteurs opposés à 180° sont en fait distants d'une épaisseur de joint e par rapport à l'axe principal de l'élément : d1 pour le bord distal 211a d2 pour le bord proximal 211b.

Avantageusement, et comme visible aux figures 1 et 2, le tiroir 212, en position avancée, obture l'embouchure 206 par un contact étanche entre le joint d'étanchéité 210 et une paroi cylindrique interne S212i du tiroir 212 et par un contact étanche entre un joint torique 228 et une paroi cylindrique externe du tiroir 212. Autrement formulé, le joint d'étanchéité 210 assure l'étanchéité de l'embouchure 206 au contact de la paroi cylindrique interne S212i du tiroir 212.

De préférence, le corps femelle 202 comprend une extrémité avant dont la surface radiale interne 220 (visible à la figure 2 notamment) est tronconique et évasée vers l'avant. Cette forme en entonnoir facilite l'emmanchement de l'élément femelle 200 autour de l'élément mâle 100 durant l'accouplement, et en particulier au début, lors du rapprochement des deux éléments de raccord.

Avantageusement, les faces avant du corps mâle 102 et de la soupape 108, ainsi que les faces avant du poussoir 208 et du tiroir 212 sont coplanaires lorsque les éléments mâle et femelle sont en configuration désaccouplée. On parle d'un raccord à face plane ou faces affleurantes. Néanmoins, il est évident que l'invention s'applique également à d'autres types de raccord (Voir le dernier mode de réalisation de l'invention).

Dans l'exemple, le poussoir 208 et la soupape 108 comportent une partie pleine avec un évasement conique ouvert en partie arrière. En d'autres termes, le poussoir 208 et la soupape 108 comprennent chacun au moins une ouverture ou une rainure, à travers lesquelles le fluide circule en configuration accouplée du raccord. Typiquement, le poussoir 208 comprend, en partie arrière, plusieurs ouvertures longitudinales 226. Les ouvertures de la soupape 108 ne sont pas visibles dans les plans de coupe des figures.

De préférence, le joint torique 228 est positionné à l'intérieur d'une gorge annulaire délimitée par la surface radiale interne du corps femelle 202. En position désaccouplée du raccord (voir figure 1), lorsque le tiroir 212 prend appui sur le siège 230 du corps 202, le joint 228 assure l'étanchéité entre le tiroir 212 et le corps 202 par un contact étanche avec la paroi cylindrique externe du tiroir 212.

Aussi, le joint 210 est sensiblement dans le même plan que le joint 228, de sorte que les deux joints remplissent leur fonction d'étanchéité en même temps lors du désaccouplement des deux éléments de raccord 100 et 200 et que la communication fluidique entre les deux éléments de raccord est fermée en un temps.

On décrit ci-après le fonctionnement du raccord, notamment la phase d'accouplement des éléments de raccord mâle et femelle 100 et 200.

En position désaccouplée, les organes de fermeture mobiles de chacun des éléments mâle et femelle, respectivement la soupape 108 et le tiroir 212, obturent de façon étanche les cavités (ou enceintes) 104 et 204 des éléments. Précisément, concernant l'élément mâle, la barrière d'étanchéité avant la mise en communication, ou en connexion, des enceintes 104 et 204 est une section d'étanchéité courbe et fermée, typiquement circulaire, entre le corps 102 et la soupape 108. Concernant l'élément femelle, la barrière d'étanchéité avant la mise en communication, ou en connexion, des enceintes 104 et 204 est formée par deux sections d'étanchéité, également de forme courbe et fermée, respectivement entre le tiroir 212 et le poussoir 208 et entre le tiroir 212 et le corps femelle 202. Précisément, la section d'étanchéité entre le poussoir 208 et le tiroir 212, matérialisée par le joint 210, est de forme elliptique, tandis que le la section d'étanchéité entre le tiroir 212 et le corps femelle 202, matérialisée par le joint 228, est de forme circulaire.

La première phase de l'accouplement consiste à approcher les éléments 100 et 200 l'un de l'autre, et notamment à approcher les extrémités distales des deux éléments l'une vers l'autre. Dans le mode de réalisation préférentiel des figures, les éléments de raccord 100 et 200 peuvent être accouplés l'un avec l'autre quelle que soit l'indexation (ou l'orientation) angulaire relative entre les deux éléments de raccord.

Par la suite, le corps mâle 102 pénètre à l'intérieur du corps femelle 202, avec un guidage le long de la surface radiale interne 220. Les axes X100 et X200 sont alors superposés avec l'axe longitudinal X-X'. Aussi, le guidage reste assuré de la même façon que les raccords de l'état de l'art.

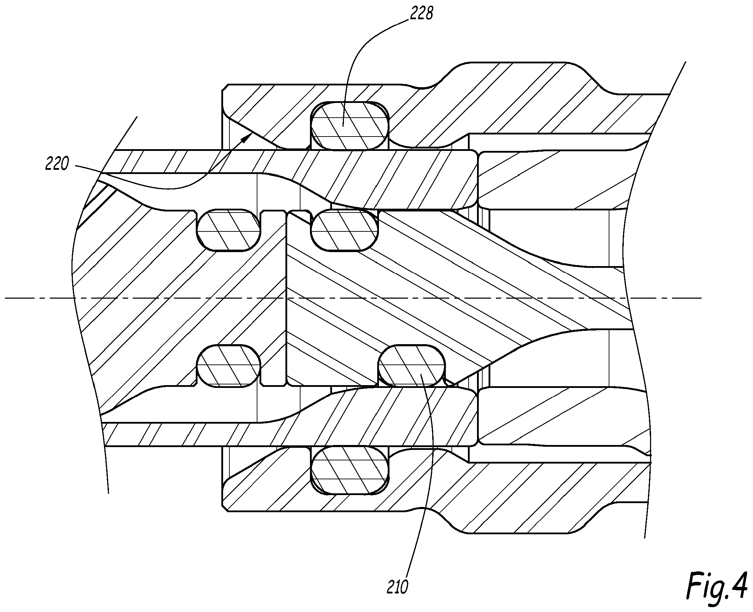

Par l'accouplement des deux éléments 100 et 200 selon l'axe d'emmanchement X-X', les organes constitutifs des deux éléments de raccord se repoussent mutuellement en maintenant l'étanchéité de chacune des enceintes 104 et 204. L'organe de soupape 108 est mobile par rapport à l'organe de corps mâle pour l'élément mâle, et l'organe de tiroir 212 est mobile par rapport aux organes de corps femelle 202 et de poussoir 208 pour l'élément femelle, selon des cinématiques connues de l'état de l'art. Précisément, le poussoir 208 pousse la soupape 108, tandis que le tiroir 212 est repoussé par le corps mâle 102. Le raccord passe alors successivement dans les configurations des figures 2 et 4. Typiquement, dans ces deux configurations, une portion distale 210a du joint 210 est toujours en contact avec la paroi cylindrique interne S102i du corps mâle 102. Aussi, le fluide ne circule pas entre les deux éléments de raccord 100 et 200.

Notamment, le plan distal P2' du bord proximal de la gorge 211 est encore dans l'embouchure 106 du corps mâle 102, si bien qu'on observe encore une section d'étanchéité fermée, en particulier elliptique, entre le poussoir 208 et le corps mâle 102.

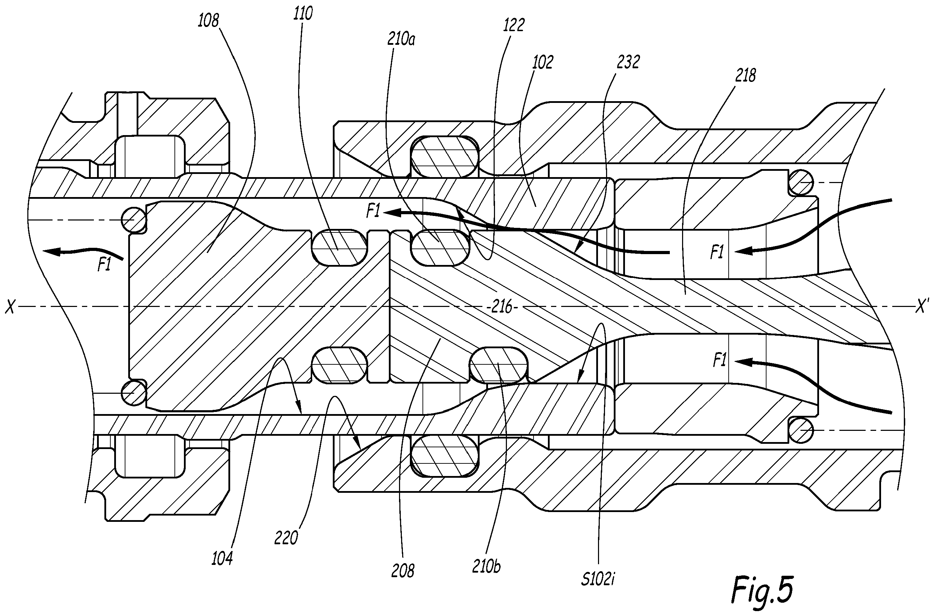

La poursuite de l'accouplement amène le raccord dans une position dite d'équilibrage, représentée à la figure 5. Cette configuration d'équilibrage est définie entre la configuration accouplée (représentée à la figure 6) et désaccouplée (représentée à la figure 1).

Dans cette configuration d'équilibrage, le joint d'étanchéité 210 comprend une portion arrière 210b qui est en contact étanche avec la paroi cylindrique interne S102i du corps mâle 102 et une portion avant 210a qui n'est pas en contact étanche avec la paroi cylindrique interne S102i du corps mâle 102, de telle façon qu'une liaison fluidique (voir flèches F1 à la figure 5) est formée entre les cavités 104 et 204 des éléments mâle et femelle. Aussi, le plan distal P2' du bord proximal 211b de la gorge périphérique n'est plus dans l'embouchure 106 du corps mâle 102, mais dans la cavité 104, ce qui fait que la portion avant 210a du joint n'est plus en contact étanche avec la paroi intérieure S102i du corps mâle 102. En revanche, le plan proximal P1' du bord proximal 211b de la gorge 211 est toujours dans l'embouchure 106, de sorte que au moins une partie du joint 210, en l'occurrence la partie arrière 210b du joint 210, est encore en contact étanche avec la paroi intérieure S102i du corps mâle 102.

Le fluide passe dans le jeu radial, nécessaire au fonctionnement du raccord, entre la paroi cylindrique externe du poussoir 208 et la paroi cylindrique interne du corps mâle 102.

Aussi, dans la configuration d'équilibrage, la paroi cylindrique interne S102i du corps mâle 102 retient radialement la portion arrière 210b du joint d'étanchéité 210, la portion avant 210a du joint d'étanchéité 210 n'étant pas retenue radialement. Cela signifie qu'il n'y a pas de passage de fluide au niveau de la portion arrière 210b du joint 210. En revanche, le fluide peut passer autour de la portion avant 210a du joint 210.

Précisément, le contact entre la portion arrière 210b du joint d'étanchéité 210 et le corps mâle 102 est un contact linéique.

De manière avantageuse, la liaison fluidique entre les cavités 104 et 204 des éléments mâle et femelle est réalisée, à l'équilibrage, de façon étanche par rapport à l'extérieur, c'est-à-dire sans fuites à l'extérieur de l'ensemble formé par le raccord et les deux canalisations C1, C2.

De préférence, dans la configuration d'équilibrage, la paroi cylindrique interne S102i du corps mâle 102 retient (ou maintient), de façon partielle, le joint d'étanchéité 210 dans le sens radial. Le raccord établit donc la pression alors qu'au moins un segment annulaire du joint 210 est toujours en contact avec la paroi cylindrique interne S102i du corps mâle 102. En d'autres termes, le dernier joint 210 assurant l'étanchéité des cavités 104 et 204 est maintenu localement lors de la phase d'équilibrage.

Avantageusement, et comme visible à la figure 5, le siège 122 de la cavité 104 du corps mâle 102 est incliné de façon à permettre une augmentation régulière de la section de passage entre le segment de joint 210 et la section conique 122 à l'accouplement, alors qu'un segment angulaire (segment arrière) du joint 210 est maintenu. En variante, cette augmentation de la section de passage provient de l'inclinaison de la section tronconique 232 reliant la tête 216 du piston central (ou poussoir) 208 à la tige 218.

La poursuite du mouvement d'accouplement amène le raccord dans la position accouplée représentée à la figure 6. Dans cette position, la veine fluide est établie (Voir flèches F2). Les joints 110 et 210 sont exposés à la veine fluide. La phase critique de mise en communication ayant été réalisée avec retenue du joint 210, les joints peuvent être exposés au débit de la veine fluide sans risquer d'être éjectés. Ainsi, le joint 210 ne reprend pas d'étanchéité suite à la configuration d'équilibrage, contrairement aux solutions connues avec protection de joint qui n'optimisent pas le passage du fluide et complexifient la structure du raccord. A partir de la fin de phase d'équilibrage, le joint 210 reste exposé à la veine fluide.

Dans l'exemple particulier considéré ici, la vitesse d'exécution de l'accouplement peut avoir une influence sur la phase de mise en pression de la canalisation aval C1. Ainsi, il peut être avantageux d'augmenter l'écart entre les plans P1 et P2 (ou P1' et P2') du joint elliptique 210 d'une distance supérieure à l'épaisseur e du joint 210 pour garantir une phase de retenue/équilibrage avant l'ouverture complète pour des diamètres de joint supérieurs. Les caractéristiques du joint et de la gorge sont ainsi choisies en fonction de l'application visée, notamment la distance d1 et/ou d2.

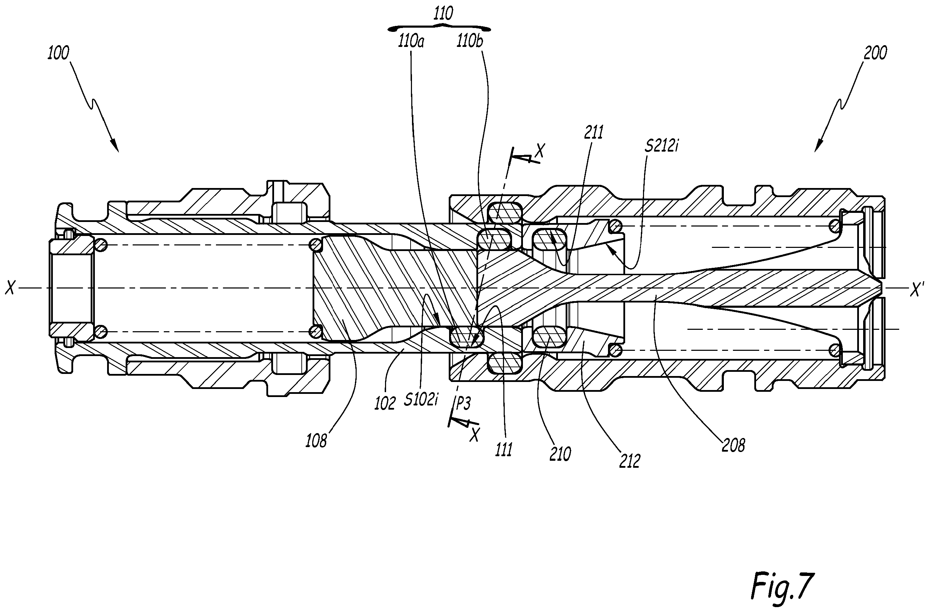

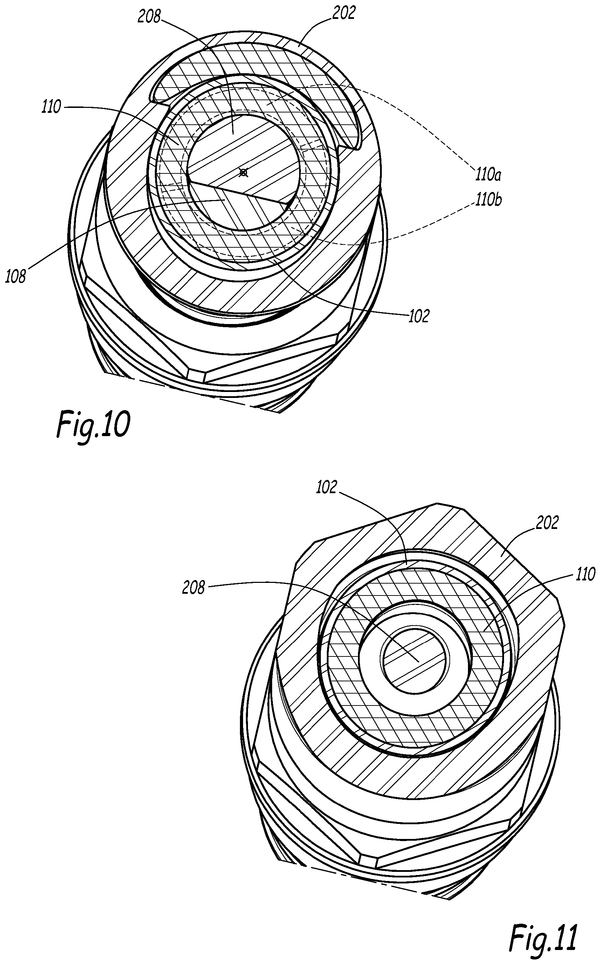

Les figures 7 à 11 représentent un deuxième mode de réalisation de l'invention. Dans ce qui suit, seules les différences par rapport au premier mode de réalisation sont décrites par souci de concision. Aussi, les mêmes références numériques sont utilisées.

Ce deuxième mode de réalisation est la solution « miroir » du premier mode de réalisation. En effet, les joints 110 et 210 sont logés à l'intérieur de gorges périphériques internes, respectivement 111 et 211, prévues à l'avant des éléments de raccord 100 et 200. Précisément, lesdites gorges 111 et 211 sont délimitées sur la surface radiale interne S102i du corps mâle 102 et sur la surface radiale interne S212i du tiroir 212.

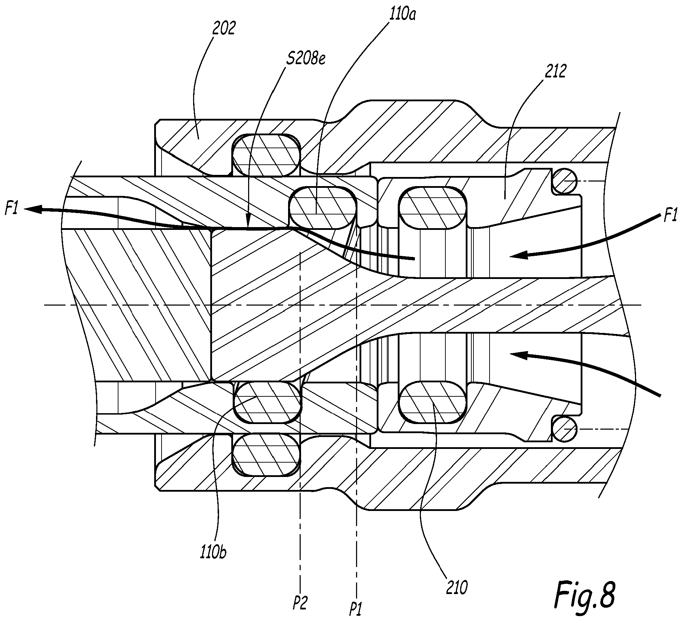

Dans ce mode de réalisation, et en particulier dans la configuration d'équilibrage représentée à la figure 8, le joint d'étanchéité 110 comprend une portion arrière 110b qui est en contact étanche avec la paroi cylindrique externe S208e du poussoir central 208 et une portion avant (ou distale) 110a qui n'est pas en contact étanche avec la paroi cylindrique externe S208e du poussoir central 208, de telle façon qu'une liaison fluidique est formée entre les cavités 104 et 204 des éléments mâle et femelle (Voir flèches F1) .

Précisément, le contact entre la portion arrière 110b du joint d'étanchéité 110 et le poussoir central 208 est un contact linéique.

Aussi, dans la configuration d'équilibrage (voir figure 8), la paroi cylindrique externe S208e du poussoir central 208 retient radialement la portion arrière 110b du joint d'étanchéité 110, la portion avant 110a n'étant pas retenue radialement.

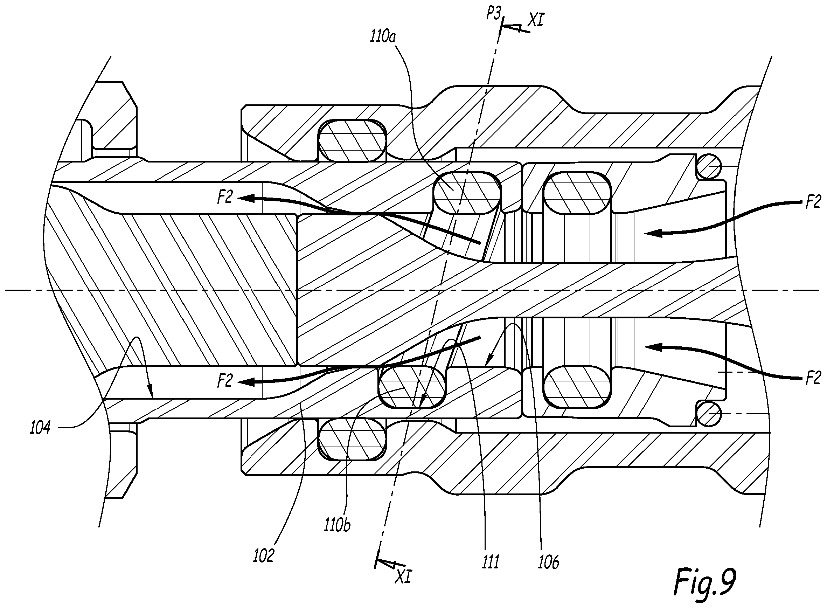

A la figure 9, le joint 110 n'est plus du tout en contact avec la paroi extérieure du poussoir 208. Aussi, le fluide est libre de circuler (voir flèches F2) dans le jeu radial entre le poussoir 208 et le corps mâle 102 : le raccord est quasiment accouplé pour établir le plein passage.

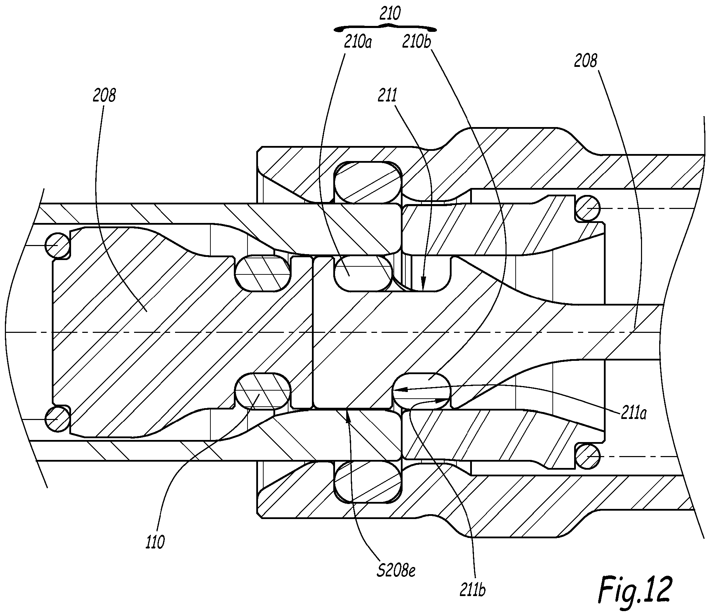

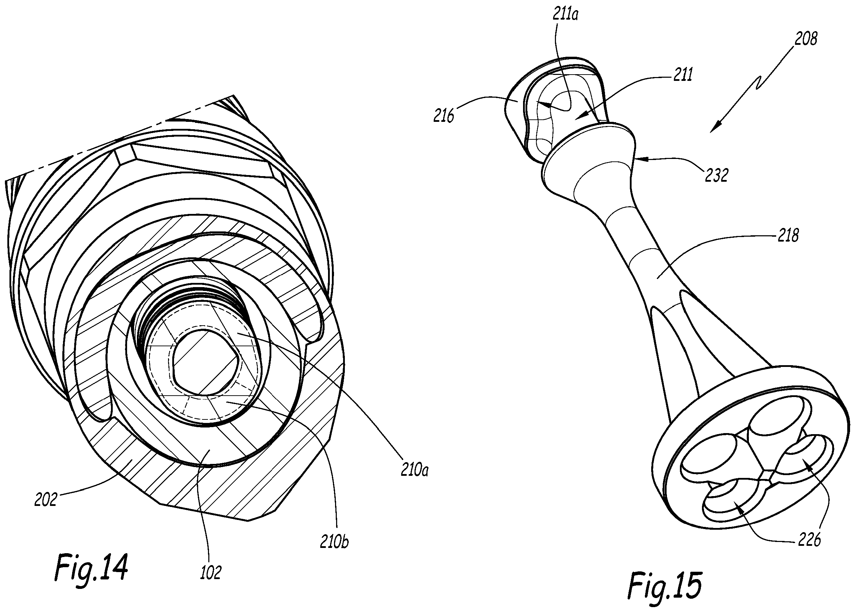

Les figures 12 à 15 représentent un troisième mode de réalisation de l'invention. Dans ce qui suit, seules les différences par rapport aux modes de réalisation précédents sont décrites par souci de concision. Aussi, les mêmes références numériques sont utilisées.

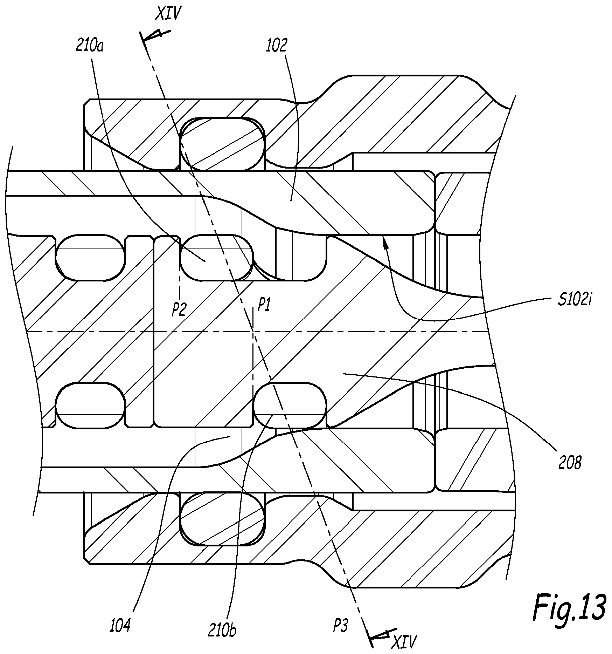

Ce mode de réalisation peut être considéré comme une variante du premier mode. Précisément, la seule différence concerne en effet la forme de la gorge 211 recevant le joint elliptique 210 : Le bord proximal 211b de la gorge 211 s'étend dans (ou est contenu dans) un plan perpendiculaire à l'axe longitudinal X200 de l'élément de raccord 200. Comme visible à la figure 13, le bord distal 211a, en revanche, s'étend bien entre deux plans perpendiculaires à l'axe longitudinal, respectivement entre un plan proximal P1 et un plan distal P2, qui sont décalés l'un par rapport à l'autre le long de l'axe longitudinal.

Aussi, la largeur de la gorge 211, c'est-à-dire la distance entre les bords 211a et 211b, mesurée dans le sens longitudinal, est variable, et donc pas, comme dans le premier mode de réalisation, constante.

Dans ce mode de réalisation en particulier, le joint 210 peut s'étendre dans un plan normal à l'axe X200 en l'absence de pression dans l'enceinte 204 de l'élément 200 mais, en fonctionnement, il se positionnera de façon oblique, en support sur le profil fraisé de la gorge 210, à l'encontre de l'effort de pression.

Avantageusement, la gorge fraisée 211 est réalisée en tournant l'arbre (servant d'ébauche à la réalisation de la pièce 208) à 90° autour de son axe principal, entre plusieurs phases de fraisage.

Selon une variante non représentée, proche du troisième mode de réalisation, la gorge externe 211 de la tête de poussoir 216 peut être cylindrique (et non plus elliptique). Aussi, un joint torique d'épaisseur inférieure à la largeur de la gorge prend place dans la gorge. Un pion est disposé dans la partie avant de la gorge pour maintenir un secteur angulaire du joint contre la paroi cylindrique du corps, alors qu'un secteur avant du joint apparait dans l'enceinte du corps mâle et *a fortiori* dans la veine fluide. La pression du fluide tend à repousser la partie du joint non contrainte latéralement par le pion, vers l'avant de la gorge, dans le plan normal à l'axe qui passe par le pion. Le joint est donc mobile dans sa gorge, dont la largeur permet d'assurer également la fermeture étanche de l'élément femelle. Cette réalisation permet de faire circuler le fluide du corps femelle vers le corps mâle, ou dans le sens opposé.

Alternativement, tout autre organe mécanique, tel qu'une bague rapportée, peut être utilisé pour assurer une contre-pression sur le joint. Typiquement, une bague rapportée dans une gorge cylindrique ou une tête rapportée avec une forme elliptique pourrait convenir à créer le décalage entre le plan distal et proximal, et produire le même effet.

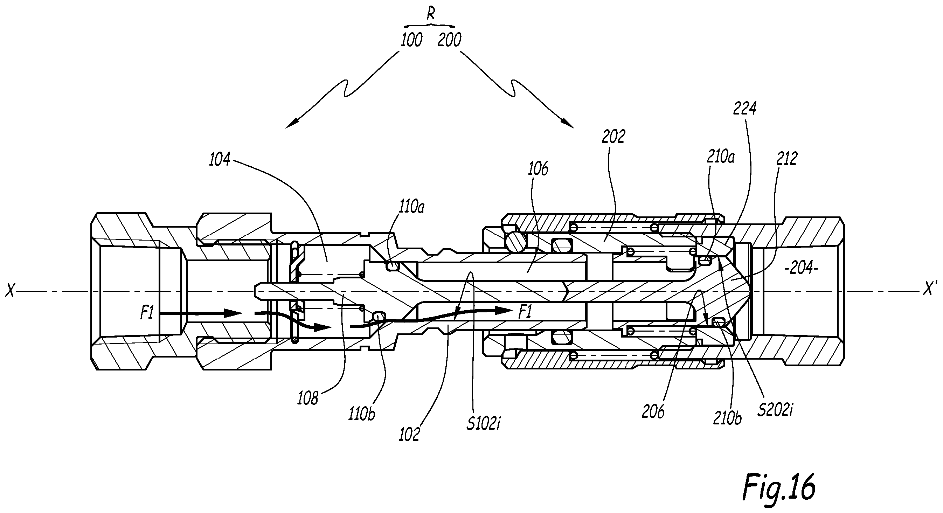

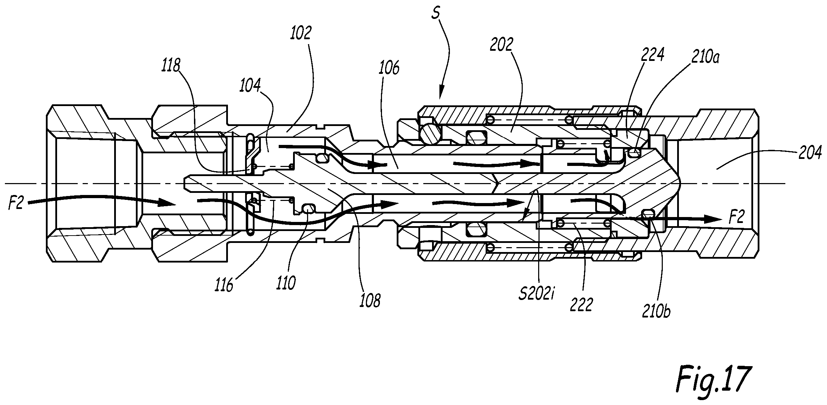

Les figures 16 et 17 représentent un quatrième mode de réalisation de l'invention. Dans ce qui suit, seules les différences par rapport aux modes de réalisation précédents sont décrites par souci de concision. Aussi, les mêmes références numériques sont utilisées.

Dans ce mode de réalisation, l'élément femelle 200 ne comporte pas de poussoir au sens où on l'a défini précédemment. Aussi, le tiroir 212 est mobile axialement à l'intérieur de la cavité longitudinale 204 entre une position avancée, dans laquelle il obture l'embouchure 206 par un contact étanche entre un second joint d'étanchéité 210 et une paroi cylindrique interne S202i du corps femelle 202, et une position reculée dans laquelle il n'obture pas l'embouchure 206.

Précisément, le tiroir 212 est mobile à l'intérieur du corps femelle 202 à l'encontre de l'effort élastique d'un ressort 222. Le ressort 222 charge élastiquement le tiroir 212 vers l'avant. Le ressort 222 est interposé entre une collerette du tiroir 212 et une butée 224, laquelle forme une partie du corps femelle 202. Dans l'exemple, la butée 224 est montée sur le corps 202 bi partite (vissé). En variante, la butée 224 pourrait être solidaire d'une des deux parties du corps 202..

La butée 224 est prévue à l'arrière du corps 202, et notamment derrière la collerette du tiroir 212.

Le joint 210 est logé à l'intérieur d'une gorge périphérique formée sur une paroi cylindrique externe du tiroir 212.

Le joint 110 est logé à l'intérieur d'une gorge périphérique formée sur une paroi cylindrique externe de la soupape 108.

Dans ce mode de réalisation, chacune des deux gorges périphériques mentionnées ci-dessus est de forme elliptique dans un plan oblique par rapport à un plan perpendiculaire à un longitudinal X-X' du raccord. Aussi, le bord proximal et/ou distal de chaque gorge périphérique s'étend entre deux plans perpendiculaires à l'axe longitudinal, respectivement entre un plan proximal et un plan distal, qui sont décalés l'un par rapport à l'autre le long de l'axe longitudinal X-X'.

Par conséquent, les joints 110 et 210 prennent tous deux place dans leur gorge respective avec une forme elliptique.

Le tiroir 212 est de forme coaxiale : il comprend un cylindre intérieur et un cylindre extérieur agencé coaxialement autour du cylindre intérieur. Le cylindre intérieur coopère avec la soupape 108 à l'accouplement, tandis que le cylindre extérieur comprend au moins une ouverture radiale de passage de fluide à l'avant du joint 210.

Dans ce mode de réalisation, également, le raccord comprend un système de verrouillage des éléments mâle et femelle, respectivement 100 et 200, en configuration accouplée, et notamment un système de verrouillage à billes. Dans l'exemple, le corps mâle 102 délimite sur sa périphérie une gorge externe adaptée pour recevoir des billes de verrouillage logées dans des perçages du corps femelle 202.

Selon une variante non représentée de ce quatrième mode de réalisation, le joint 210 pourrait être porté par le corps femelle 202, ou du moins par la butée 224 faisant partie du corps femelle. Précisément, le joint 210 serait disposé à l'intérieur d'un logement prévu sur une paroi cylindrique interne du corps 202 (ici de la butée 228).

On décrit ci-après le fonctionnement du raccord des figures 16 et 17, notamment la phase d'accouplement des éléments de raccord mâle et femelle 100 et 200.

En position désaccouplée, les organes de fermeture mobiles de chacun des éléments mâle et femelle, respectivement la soupape 108 et le tiroir 212, obturent de façon étanche les cavités (ou enceintes) 104 et 204 des éléments. Précisément, concernant l'élément mâle, la barrière d'étanchéité avant la mise en communication, ou en connexion, des enceintes 104 et 204 est une section d'étanchéité courbe et fermée, typiquement elliptique, entre le corps 102 et la soupape 108. Concernant l'élément femelle, la barrière d'étanchéité avant la mise en communication, ou en connexion, des enceintes 104 et 204 est formée par une section d'étanchéité, également de forme courbe et fermée, typiquement elliptique, respectivement entre le tiroir 212 et le corps femelle 202.

La position désaccouplée n'est pas représentée pour ce mode de réalisation.

Par l'accouplement des deux éléments 100 et 200 selon l'axe d'emmanchement X-X', les organes constitutifs des deux éléments de raccord se repoussent mutuellement en maintenant l'étanchéité de chacune des enceintes 104 et 204. Précisément, la soupape 108 et le tiroir 212 se repoussent mutuellement l'un l'autre vers l'arrière, comprimant ainsi leur ressort de rappel respectif 116 et 222.

Le raccord passe alors de la configuration totalement désaccouplée à la configuration de la figure 16. Dans cette configuration, une portion distale (ou avant) 110a du joint 110 est toujours en contact avec la paroi cylindrique interne S102i du corps mâle 102. En revanche, une portion proximale (ou arrière) du joint 110 n'est plus en contact étanche avec la paroi cylindrique interne S102i du corps mâle 102. L'élément de raccord mâle 100 n'est donc plus étanche, comme le montrent les flèches F1 symbolisant le passage de fluide à travers le raccord et le passage d'équilibrage.

Toutefois, le joint 210 est encore en intégralité en contact étanche avec la paroi cylindrique interne du corps femelle, et notamment avec la paroi cylindrique interne de la butée 224 (faisant partie du corps femelle). Aussi, le fluide ne circule pas entre les deux éléments de raccord 100 et 200.

La poursuite de l'accouplement amène le raccord dans la position dite d'équilibrage, représentée à la figure 17.

Dans cette configuration d'équilibrage, le joint d'étanchéité 210 comprend une portion avant 210a qui est en contact étanche avec la paroi cylindrique interne S202i du corps femelle 202 et une portion arrière 210b qui n'est plus en contact étanche avec la paroi cylindrique interne S202i du corps femelle 202, de telle façon qu'une liaison fluidique (voir flèches F2 à la figure 17) est formée entre les cavités 104 et 204 des éléments mâle et femelle.

Aussi, dans la configuration d'équilibrage, la paroi cylindrique interne S202i du corps femelle 202 retient radialement la portion avant 210a du joint d'étanchéité 210, la portion arrière 210b du joint d'étanchéité 210 n'étant pas retenue radialement.

La poursuite du mouvement d'accouplement amène le raccord dans la position accouplée (non représentée), dans laquelle la veine fluide est établie. Les joints 110 et 210 sont exposés à la veine fluide. La phase critique de mise en communication ayant été réalisée avec retenue du joint 210, les joints peuvent être exposés au débit de la veine fluide sans risquer d'être éjectés. Ainsi, le joint 210 ne reprend pas d'étanchéité suite à la configuration d'équilibrage, contrairement aux solutions connues avec protection de joint qui n'optimisent pas le passage du fluide et complexifient la structure du raccord. A partir de la fin de phase d'équilibrage, le joint 210 reste exposé à la veine fluide.

L'incertitude sur la séquence d'ouverture des clapets 108 et 212 justifie l'emploi de deux gorges elliptiques, respectivement une sur chaque élément de raccord, car celles-ci garantissent une connexion des conduites C1 et C2 avec une fuite contrôlée, sans risque d'éjection de joint(s) quel que soit l'ordre d'ouverture des clapets. La soupape mâle pouvant être repoussée et prendre appui sur son siège arrière avant l'ouverture de la liaison fluidique ou après l'ouverture de la liaison, et la soupape femelle pouvant également être repoussée contre la butée 224 avant l'ouverture de la liaison fluidique ou après l'ouverture, avec la retenue du joint 110 et/ou 210 en phase d'équilibrage. Egalement, ce mode de réalisation convient à une application où les deux sens de circulations peuvent être sélectivement employés.

En variante non représentée, on peut envisager des gorges de formes sinusoïdales/ondulée, en zigzag ou autre, pour lesquelles la section d'étanchéité n'est pas contenue dans un plan orthogonal à l'axe longitudinal du raccord. Autrement dit, la gorge du premier ou du second joint, respectivement 110 ou 210, est de forme ondulée, en s'étendant entre deux plans normaux à l'axe du raccord et distants. Egalement, le joint 110 ou 210 peut être de forme ondulée, en zigzag ou d'autre forme que torique. Le contact du joint peut alors être réalisé en plusieurs segments linéiques, et non pas de façon annulaire.

Aussi, selon la forme du logement 111 ou 211, le joint 110 ou 210 peut avoir plusieurs secteurs angulaires dans la veine fluide alors que plusieurs secteurs angulaires sont toujours retenus par une surface de contact.

Selon une autre variante non représentée, la configuration d'équilibrage est atteinte avec un joint elliptique 210 de poussoir 208 qui est à cheval à la fois sur le tiroir femelle 212 et le corps mâle 102, le plan distal du joint ayant atteint le siège d'étanchéité de la soupape mâle 108 et un diamètre supérieur au joint. Ce principe est applicable à tous les modes de réalisation de l'invention. Cela est notamment réalisé quand les plans définissant la gorge elliptique sont espacés d'au moins deux épaisseurs de tore et/ou si la surface en contact avec le joint de soupape est peu étendue axialement : le joint perd un secteur angulaire de contact avec le corps mâle, alors qu'un autre secteur annulaire est toujours en contact avec le tiroir 212.

Selon une autre variante, le poussoir central 208 de l'élément femelle est creux et comprend au moins une ouverture radiale.

Selon une autre variante non représentée, le raccord R est du type coaxial, pour des applications de conduites de fluide entre deux éléments de raccord coaxiaux.

Selon une autre variante non représentée, les joints 110 et 210, entre autres, du raccord R peuvent être des joints surmoulés, ou adhérisés par surmoulage.

Selon une autre variante non représentée, les diamètres D204 et D206, respectivement de la cavité 204 et de l'embouchure distale 206 du corps femelle 202, sont égaux.

## Revendications

1. Raccord rapide (R) pour la jonction amovible de deux canalisations (C1, C2) parcourues par un fluide sous pression, composé d'un élément mâle (100) et d'un élément femelle (200) apte à recevoir l'élément mâle par emmanchement selon un axe longitudinal (X-X') entre une configuration désaccouplée et une configuration accouplée,
l'élément mâle (100) comprenant :
- un corps mâle cylindrique (102), définissant une cavité longitudinale (104) et une embouchure distale (106) de diamètre (D106) inférieur à celui (D104) de la cavité,
- une soupape (108) mobile axialement à l'intérieur de la cavité, entre une position avancée dans laquelle elle obture l'embouchure et une position reculée dans laquelle elle n'obture pas l'embouchure, et
- un premier joint d'étanchéité (110), qui est porté par la soupape ou le corps mâle et qui prend appui respectivement sur une paroi cylindrique interne (S102i) du corps mâle ou sur une paroi cylindrique externe de la soupape (S108e), lorsque la soupape est en position avancée,
et l'élément femelle (200) comprenant :
- un corps femelle cylindrique (202), définissant une cavité longitudinale (204) et une embouchure distale (206) de diamètre (D206) inférieur ou égal à celui (D204) de la cavité,
- un tiroir (212), mobile axialement à l'intérieur de la cavité longitudinale entre une position avancée, dans laquelle il obture l'embouchure (206) et une position reculée dans laquelle il n'obture pas l'embouchure, et
- un second joint d'étanchéité (210), qui est porté par un organe parmi un poussoir central (208) solidaire du corps femelle, le tiroir (212) ou le corps femelle (202) et qui prend appui sur un autre organe parmi le tiroir, le poussoir ou le corps femelle, lorsque le tiroir est en position avancée,
le premier ou le second joint d'étanchéité étant logé à l'intérieur d'une gorge périphérique (111 ; 211),
**caractérisé en ce qu'**un bord proximal (111b ; 211b) ou distal (111a ; 211a) de la gorge périphérique s'étend entre deux plans perpendiculaires à un axe longitudinal (X100 ; X200) de l'élément mâle ou femelle, respectivement entre un plan proximal (P1) et un plan distal (P2), qui sont décalés l'un par rapport à l'autre le long de l'axe longitudinal.

2. Raccord rapide selon la revendication précédente, **caractérisé en ce que** les deux plans proximal (P1) et distal (P2) sont décalés l'un de l'autre d'une distance (d1,d2) correspondant à une, deux, trois ou quatre épaisseurs de tore du premier (110) ou du second (210) joint d'étanchéité.

3. Raccord rapide selon la revendication 1 ou 2, **caractérisé en ce que** le bord proximal ou distal de la gorge périphérique comprend deux tronçons positionnés l'un par rapport à l'autre à une distance, mesurée parallèlement à l'axe longitudinal, identique à la distance entre le plan proximal (P1) et le plan distal (P2) et **en ce que** ces deux tronçons sont disposés de manière diamétralement opposée l'un par rapport à l'autre.

4. Raccord rapide selon l'une des revendications précédentes, **caractérisé en ce que** le tiroir (212) est disposé radialement entre le corps femelle (202) et un poussoir central (208) solidaire du corps femelle.

5. Raccord rapide selon l'une des revendications précédentes, **caractérisé en ce que** le premier joint d'étanchéité (110) est porté par le corps mâle (102) ou la soupape (108), alors que le second joint d'étanchéité (210) est porté par le tiroir (212) ou le poussoir central (208).

6. Raccord rapide selon l'une des revendications précédentes, caractérisé en ce dans une configuration d'équilibrage, définie entre la configuration désaccouplée et la configuration accouplée du raccord, le second joint d'étanchéité (210) comprend une portion arrière (210b) qui est en contact étanche avec la paroi cylindrique interne (S102i) du corps mâle (102) et une portion avant (210a) qui n'est pas en contact étanche avec la paroi cylindrique interne (S102i) du corps mâle (102), de telle façon qu'une liaison fluidique est formée entre les cavités (104 ; 204) des éléments mâle et femelle.

7. Raccord rapide selon la revendication 6, **caractérisé en ce que** la paroi cylindrique interne (S102i) du corps mâle (102) est apte à retenir radialement la portion arrière du second joint d'étanchéité (210) dans la configuration d'équilibrage, la portion avant du second joint d'étanchéité (210) n'étant pas retenue radialement.

8. Raccord rapide selon l'une des revendications 1 à 5, **caractérisé en ce que** dans une configuration d'équilibrage, définie entre la configuration désaccouplée et la configuration accouplée du raccord le premier joint d'étanchéité (110) comprend une portion arrière (110b) qui est en contact étanche avec une paroi cylindrique externe (S208e) du poussoir central (208) et une portion avant (110a) qui n'est pas en contact étanche avec la paroi cylindrique externe (S208e) du poussoir central (208), de telle façon qu'une liaison fluidique est formée entre les cavités (104 ; 204) des éléments mâle et femelle.

9. Raccord rapide selon la revendication 8, **caractérisé en ce que** la portion arrière du premier joint d'étanchéité (110) est retenue radialement par la paroi cylindrique externe (S208e) du poussoir central (208) dans la configuration d'équilibrage, la portion avant du premier joint d'étanchéité (110) n'étant pas retenue radialement.

10. Raccord rapide selon l'une des revendications 6 à 9, **caractérisé en ce que** le contact entre la portion arrière (110b; 210b) du premier joint d'étanchéité (110) ou du second joint d'étanchéité (210) et respectivement le poussoir central (208) ou le corps mâle (102), est un contact linéique.

11. Raccord rapide selon la revendication 10, **caractérisé en ce que** la ligne de contact entre la portion arrière du premier joint d'étanchéité (110) ou du second joint d'étanchéité (210) et respectivement le poussoir central (208) ou le corps mâle (102), comprend plusieurs segments linéiques disjoints.

12. Raccord rapide selon l'une des revendications 6 à 11, **caractérisé en ce que** la liaison fluidique entre les cavités (104 ; 204) des éléments mâle et femelle est réalisée de façon étanche par rapport à l'extérieur.

13. Raccord rapide selon l'une des revendications précédentes, **caractérisé en ce que** la gorge périphérique (211) est formée sur une paroi cylindrique externe du poussoir central (208) et loge le second joint d'étanchéité (210), alors que le premier joint d'étanchéité (110) est logé à l'intérieur d'une autre gorge périphérique (111) formée sur la paroi cylindrique externe (S108e) de la soupape (108).

14. Raccord rapide selon l'une des revendications 1 à 12, **caractérisé en ce que** la gorge périphérique (111) est formée sur la paroi cylindrique interne (S102i) du corps mâle (102) et loge le premier joint d'étanchéité (110), alors que le second joint d'étanchéité (210) est logé à l'intérieur d'une autre gorge périphérique (211) formée sur une paroi cylindrique interne (S212i) du tiroir (212).

15. Raccord rapide selon l'une des revendications précédentes, **caractérisé en ce que** la gorge périphérique (111 ; 211) est de forme elliptique dans un plan (P3) oblique par rapport à un plan perpendiculaire à un axe longitudinal (X100 ; X200) de l'élément de raccord (100 ; 200).

## Patentansprüche

1. Schnellkupplung (R) für die lösbare Verbindung von zwei von einem Druckfluid durchströmten Leitungen (C1, C2), bestehend aus einem Einsteckelement (100) und einem Aufnahmeelement (200), das in der Lage ist, das Einsteckelement durch Ineinanderstecken entlang einer Längsachse (X-X') zwischen einer entkuppelten Konfiguration und einer gekuppelten Konfiguration aufzunehmen, wobei das Einsteckelement (100) umfasst:
- einen zylindrischen Einsteckkörper (102), der einen Längshohlraum (104) und eine distale Mündung (106) mit einem Durchmesser (D106), der kleiner als der (D104) des Hohlraums ist, begrenzt,
- ein Ventil (108), das axial im Inneren des Hohlraums zwischen einer vorgerückten Stellung, in der es die Öffnung verschließt, und einer zurückgezogenen Stellung, in der es die Öffnung nicht verschließt, beweglich ist, und
- eine erste Dichtung (110), die von dem Ventil oder dem Einsteckkörper getragen wird und die jeweils an einer inneren zylindrischen Wand (S102i) des Einsteckkörpers oder an einer äußeren zylindrischen Wand des Ventils (S108e) anliegt, wenn das Ventil in der vorgerückten Stellung ist,
und das Aufnahmeelement (200) umfasst:
- einen zylindrischen Aufnahmekörper (202), der einen Längshohlraum (204) und eine distale Mündung (206) mit einem Durchmesser (D206), der kleiner als der oder gleich dem (D204) des Hohlraums ist, begrenzt,
- einen Schieber (212), der axial im Inneren des Längshohlraums zwischen einer vorgerückten Stellung, in der er die Öffnung (206) verschließt, und einer zurückgezogenen Stellung, in der er die Öffnung nicht verschließt, beweglich ist, und
- eine zweite Dichtung (210), die von einem Element unter einem mittleren Stößel (208), der mit dem Aufnahmekörper verbunden ist, dem Schieber (212) oder dem Aufnahmekörper (202) getragen wird, und die sich auf einem anderen Element unter dem Schieber, dem Stößel oder dem Aufnahmekörper abstützt, wenn der Schieber in der vorgerückten Stellung ist,
wobei die erste oder zweite Dichtung in einer Umfangsnut (111; 211) gelagert ist,
**dadurch gekennzeichnet, dass** sich ein proximaler (111b; 211b) oder distaler (111a; 211a) Rand der Umfangsnut zwischen zwei Ebenen senkrecht zu einer Längsachse (X100; X200) des Einsteck- oder Aufnahmeelements, jeweils zwischen einer proximalen Ebene (P1) und einer distalen Ebene (P2), die entlang der Längsachse zueinander versetzt sind, erstreckt.

2. Schnellkupplung nach dem vorhergehenden Anspruch, **dadurch gekennzeichnet, dass** die beiden proximalen (P1) und distalen (P2) Ebenen um einen Abstand (d1, d2) zueinander versetzt sind, der einer, zwei, drei oder vier Dicken des Torus der ersten (110) oder zweiten (210) Dichtung entspricht.

3. Schnellkupplung nach Anspruch 1 oder 2, **dadurch gekennzeichnet, dass** der proximale oder distale Rand der Umfangsnut aus zwei Abschnitten besteht, die in einem parallel zur Längsachse gemessenen Abstand zueinander liegen, der gleich dem Abstand zwischen der proximalen Ebene (P1) und der distalen Ebene (P2) ist, und dass diese beiden Abschnitte diametral gegenüberliegend angeordnet sind.

4. Schnellkupplung nach einem der vorhergehenden Ansprüche, **dadurch gekennzeichnet, dass** der Schieber (212) radial zwischen dem Aufnahmekörper (202) und einem mit dem Aufnahmekörper verbundenen mittleren Stößel (208) angeordnet ist.

5. Schnellkupplung nach einem der vorhergehenden Ansprüche, **dadurch gekennzeichnet, dass** die erste Dichtung (110) von dem Einsteckkörper (102) oder dem Ventil (108) getragen wird, während die zweite Dichtung (210) von dem Schieber (212) oder dem mittleren Stößel (208) getragen wird.

6. Schnellkupplung nach einem der vorhergehenden Ansprüche, **dadurch gekennzeichnet, dass** in einer Ausgleichskonfiguration, die zwischen der entkuppelten Konfiguration und der gekuppelten Konfiguration der Kupplung definiert ist, die zweite Dichtung (210) einen hinteren Bereich (210b), der in abdichtendem Kontakt mit der inneren zylindrischen Wand (S102i) des Einsteckkörpers (102) ist, und einen vorderen Bereich (210a), der nicht in abdichtendem Kontakt mit der inneren zylindrischen Wand (S102i) des Einsteckkörpers (102) ist, umfasst, derart dass eine Fluidverbindung zwischen den Hohlräumen (104; 204) des Einsteck- und Aufnahmeelements gebildet wird.

7. Schnellkupplung nach Anspruch 6, **dadurch gekennzeichnet, dass** die innere zylindrische Wand (S102i) des Einsteckkörpers (102) geeignet ist, den hinteren Bereich der zweiten Dichtung (210) in der Ausgleichskonfiguration radial zu halten, wobei der vordere Bereich der zweiten Dichtung (210) nicht radial gehalten wird.

8. Schnellkupplung nach einem der Ansprüche 1 bis 5, **dadurch gekennzeichnet, dass** in einer Ausgleichskonfiguration, die zwischen der entkuppelten Konfiguration und der gekuppelten Konfiguration der Kupplung definiert ist, die erste Dichtung (110) einen hinteren Bereich (110b), der in abdichtendem Kontakt mit einer äußeren zylindrischen Wand (S208e) des mittleren Stößels (208) ist, und einen vorderen Bereich (110a) umfasst, der nicht in abdichtendem Kontakt mit der äußeren zylindrischen Wand (S208e) des mittleren Stößels (208) ist, derart dass eine Fluidverbindung zwischen den Hohlräumen (104; 204) des Einsteck- und des Aufnahmeelements gebildet wird.

9. Schnellkupplung nach Anspruch 8, **dadurch gekennzeichnet, dass** der hintere Bereich der ersten Dichtung (110) durch die äußere zylindrisehe Wand (S208e) des mittleren Stößels (208) in der Ausgleichskonfiguration radial gehalten wird, wobei der vordere Bereich der ersten Dichtung (110) nicht radial gehalten wird.

10. Schnellkupplung nach einem der Ansprüche 6 bis 9, **dadurch gekennzeichnet, dass** der Kontakt zwischen dem hinteren Bereich (110b; 210b) der ersten Dichtung (110) oder der zweiten Dichtung (210) und jeweils dem mittleren Stößel (208) oder dem Einsteckkörper (102) ein Linienkontakt ist.

11. Schnellkupplung nach Anspruch 10, **dadurch gekennzeichnet, dass** die Berührungslinie zwischen dem hinteren Bereich der ersten Dichtung (110) oder der zweiten Dichtung (210) und jeweils dem mittleren Stößel (208) oder dem Einsteckkörper (102) eine Mehrzahl von disjunkten Liniensegmenten umfasst.

12. Schnellkupplung nach einem der Ansprüche 6 bis 11, **dadurch gekennzeichnet, dass** die Fluidverbindung zwischen den Hohlräumen (104; 204) des Einsteck- und Aufnahmeelements nach außen hin abgedichtet ausgeführt ist.

13. Schnellkupplung nach einem der vorhergehenden Ansprüche, **dadurch gekennzeichnet, dass** die Umfangsnut (211) an einer äußeren zylindrischen Wand des mittleren Stößels (208) ausgebildet ist und die zweite Dichtung (210) aufnimmt, während die erste Dichtung (110) in einer anderen Umfangsnut (111) untergebracht ist, die an der äußeren zylindrischen Wand (S108e) des Ventils (108) ausgebildet ist.

14. Schnellkupplung nach einem der Ansprüche 1 bis 12, **dadurch gekennzeichnet, dass** die Umfangsnut (111) an der inneren zylindrischen Wand (S102i) des Einsteckkörpers (102) ausgebildet ist und die erste Dichtung (110) aufnimmt, während die zweite Dichtung (210) in einer anderen Umfangsnut (211) untergebracht ist, die an einer inneren zylindrischen Wand (S212i) des Schiebers (212) ausgebildet ist.

15. Schnellkupplung nach einem der vorhergehenden Ansprüche, **dadurch gekennzeichnet, dass** die Umfangsnut (111; 211) in einer Ebene (P3) schräg zu einer Ebene senkrecht zu einer Längsachse (X100; X200) des Kupplungselements (100; 200) eine elliptische Form aufweist.

## Claims

1. A quick coupling (R) for the detachable connection of two pipes (C1, C2) through which a pressurized fluid flows, made up of a male element (100) and a female element (200) able to receive the male element by fitting along a longitudinal axis (X-X') between an uncoupled configuration and a coupled configuration, the male element (100) comprising:
- a cylindrical male body (102), defining a longitudinal cavity (104) and a distal mouth (106), the diameter (D106) of which is smaller than that (D104) of the cavity,
- a valve (108) movable axially inside the cavity, between a forward position in which the valve closes off the mouth and a withdrawn position in which the valve does not close off the mouth, and
- a first sealing gasket (110), which is borne by the valve or the male body, and which bears respectively on an inner cylindrical wall (S102i) of the male body or on an outer cylindrical wall of the valve (S108e), when the valve is in the forward position,
and the female coupling element (200) comprising:
- a cylindrical female body (202), defining a longitudinal cavity (204) and a distal mouth (206), the diameter (D206) of which is smaller than or equal to that (D204) of the cavity,
- a slide valve (212), which is movable axially inside the longitudinal cavity between a forward position, in which the slide valve closes off the mouth (206), and a withdrawn position, in which the slide valve does not close off the mouth, and
- a second sealing gasket (210), which is borne by a member from among a central push-piece (208) secured to the female body, the slide valve (212) or the female body (202) and which bears on another member from among the slide valve, the push-piece or the female body, when the slide valve is in the forward position,
wherein the first or the second sealing gasket is housed inside a peripheral groove (111; 211),
**characterized in that** a proximal (111b; 211b) or distal (111a; 211a) edge of the peripheral groove extends between two planes that are perpendicular to a longitudinal axis (X100; X200) of the male or female element, respectively between a proximal plane (P1) and a distal plane (P2), which are offset relative to one another along the longitudinal axis.

2. The quick coupler according to the preceding claims, **characterized in that** the two proximal (P1) and distal (P2) planes are offset from one another by a distance (d1,d2) corresponding to one, two, three or four toroid thicknesses of the first (110) or the second (210) sealing gasket.

3. The quick coupling according to claim 1 or 2, **characterized in that** the proximal or distal edge of the peripheral groove comprises two sections positioned relative to one another at a distance, measured parallel to the longitudinal axis, identical to the distance between the proximal plane (P1) and the distal plane (P2), and **in that** these two sections are positioned diametrically opposite one another.

4. The quick coupling according to one of the preceding claims, **characterized in that** the slide valve (212) is positioned radially between the female body (202) and a central push-piece (208) secured to the female body.

5. The quick coupling according to one of the preceding claims, **characterized in that** the first sealing gasket (110) is borne by the male body (102) or the valve (108), while the second sealing gasket (210) is borne by the slide valve (212) or the central push-piece (208).

6. The quick coupling according to one of the preceding claims, **characterized in that** in a balancing configuration, defined between the uncoupled configuration and the coupled configuration of the coupling, the second sealing gasket (210) comprises a rear portion (210b) that is in sealed contact with the inner cylindrical wall (S102i) of the male body (102) and a front portion (210a) that is not in sealed contact with the inner cylindrical wall (S102i) of the male body (102), such that a fluid connection is formed between the cavities (104; 204) of the male and female elements.

7. The quick coupling according to claim 6, **characterized in that** the inner cylindrical wall (S102i) of the male body (102) is able to radially retain the rear portion of the second sealing gasket (210) in the balancing configuration, the front portion of the second sealing gasket (210) not being radially retained.

8. The quick coupling according to one of claims 1 to 5, **characterized in that** in a balancing configuration, defined between the uncoupled configuration and the coupled configuration of the coupling, the first sealing gasket (110) comprises a rear portion (110b) that is in sealed contact with an outer cylindrical wall (S208e) of the central push-piece (208) and a front portion (110a) that is not in sealed contact with the outer cylindrical wall (S208e) of the central push-piece (208), such that a fluid connection is formed between the cavities (104; 204) of the male and female elements.

9. The quick coupling according to claim 8, **characterized in that** the rear portion of the first sealing gasket (110) is radially retained by the outer cylindrical wall (S208e) of the central push-piece (208) in the balancing configuration, the front portion of the first sealing gasket (110) not being radially retained.

10. The quick coupling according to one of claims 6 to 9, **characterized in that** the contact between the rear portion (110b; 210b) of the first sealing gasket (110) or the second sealing gasket (210) and respectively the central push-piece (208) or the male body (102), is a linear contact.

11. The quick coupling according to claim 10, **characterized in that** the contact line between the rear portion of the first sealing gasket (110) or the second sealing gasket (210) and respectively the central push-piece (208) or the male body (102), comprises several separate linear segments.

12. The quick coupling according to one of claims 6 to 11, **characterized in that** the fluid connection between the cavities (104; 204) of the male and female elements is done sealably relative to the outside.

13. The quick coupling according to one of the preceding claims, **characterized in that** the peripheral groove (211) is formed on an outer cylindrical wall of the central push-piece (208) and houses the second sealing gasket (210), while the first sealing gasket (110) is housed inside another peripheral groove (111) formed on the outer cylindrical wall (S108e) of the valve (108).

14. The quick coupling according to one of claims 1 to 12, **characterized in that** the peripheral groove (111) is formed on the inner cylindrical wall (S102i) of the male body (102) and houses the first sealing gasket (110), while the second sealing gasket (210) is housed inside another peripheral groove (211) formed on an inner cylindrical wall (S212i) of the slide valve (212).

15. The quick coupling according to one of the preceding claims, **characterized in that** the peripheral groove (111; 211) has an elliptical shape in an oblique plane (P3) relative to a plane perpendicular to a longitudinal axis (X100; X200) of the coupling element (100; 200).
